# EUROPEAN PATENT APPLICATION

(11) **EP 2 824 545 A1**
(43) Date of publication of application: **14.01.2015**
(21) Application number: 12870575.3
(22) Date of filing: 10.10.2012
(51) Int. Cl.: G06F 3/041, G06F 3/0481, G06F 3/0488, H04M 1/00

(54) **TERMINAL DEVICE AND METHOD FOR CONTROLLING TERMINAL DEVICE**

(30) Priority: 06.03.2012 JP 2012049380
(71) Applicant: NEC CASIO Mobile Communications, Ltd., Kawasaki-shi Kanagawa 211-8666 (JP)
(72) Inventor: UNO, Masayuki, Kawasaki-shi Kanagawa 211-8666 (JP)
(74) Representative: Vossius & Partner
(86) International application number: PCT/JP2012/006490
(87) International publication number: WO 2013/132552

(57) **Abstract**

A terminal device (100) includes a display control means (12) for displaying a first index associated with first data and a second index associated with second data at positions distant from each other on a display unit, a detection means (13) for detecting which of a first operation that brings the first index and the second index together and a second operation that moves one of the first index and the second index to a display position of the other one an operation on the first index and the second index is and an execution means (14) for executing first processing using the first data and the second data when the first operation is detected, and executing second processing different from the first processing using the first data and the second data when the second operation is detected.

## Description

### Technical Field

The present invention relates to a terminal device, a control method for a terminal device, and a control program and, particularly, to a terminal device, a control method for a terminal device, and a control program for performing processing according to an operation on a plurality of indexes displayed on a screen.

### Background Art

A technique related to a navigation device that allows setting of a destination by directly specifying a facility icon displayed on a map is disclosed in Patent Literature 1. The navigation device according to Patent Literature 1 detects that a user has touched a facility icon displayed on a touch panel and displays a screen such as a pop-up that is associated with the facility icon. Then, the navigation device displays a destination setting button, a stopping point setting button, and facility information (address, telephone number, guide information etc.) and the like on the screen. The navigation device accepts a user's selection operation on the destination setting button or the stopping point setting button on the screen and thereby sets the facility icon as the destination or the stopping point.

Further, techniques related to processing according to a touch panel operation on an icon displayed on a map are disclosed also in Patent Literatures 2 to 4.

### Citation List

### Patent Literature

PTL1: Japanese Unexamined Patent Application Publication No. 2006-284342
PTL2: Japanese Unexamined Patent Application Publication No. 2008-304325
PTL3: Japanese Unexamined Patent Application Publication No. 2008-180786
PTL4: Japanese Unexamined Patent Application Publication No. 2008-111752

### Summary of Invention

### Technical Problem

According to Patent Literature 1, only one type of processing can be performed in one operation on one index. For example, to find a travel route from one facility to another facility on a map, it is necessary to perform a plurality of processing: processing of receiving selection of a facility as a place of departure and a facility as a place of destination and processing of associating them. In this case, a user first performs an operation to select a facility icon indicating a facility as a departure point, further performs an operation to select a facility icon indicating a facility as a destination point, and then performs an operation to give an instruction to associate the departure point and the destination point with each other.

Another example is a case of sending an object on a map to another user by email. In this case, a user generally needs to perform an operation to select an object to be sent, perform an operation to specify destination address information, and then perform an operation to send an email.

Thus, in any case, a user needs to perform many operations to execute a plurality of processing based on a plurality of indexes, which makes the operation complicated and requires the user to follow a plurality of menus each time, causing a problem that the operation is not intuitive and not user-friendly.

The present invention has been accomplished to solve the above problems and an exemplary object of the present invention is thus to provide a terminal device, a control method for a terminal device, and a control program that enable a series of processing on a plurality of indexes to be performed easily with an intuitive operation.

### Solution to Problem

A terminal device according to a first exemplary aspect of the present invention includes a display control means for displaying a first index associated with first data and a second index associated with second data at positions distant from each other on a display unit, a detection means for detecting which of a first operation that brings the first index and the second index together and a second operation that moves one of the first index and the second index to a display position of the other one an operation on the first index and the second index is, and an execution means for executing first processing using the first data and the second data when the first operation is detected, and executing second processing different from the first processing using the first data and the second data when the second operation is detected.

A terminal device according to a second exemplary aspect of the present invention includes a display control means for displaying a first index associated with address information of an external sender received from the sender through a first communication service and time information related to the reception and a second index different from the first index at positions distant from each other on a display unit, a detection means for detecting an operation on the first index and the second index, a selection means for selecting one of the first communication service and a second communication service different from the first communication service based on the time information associated with the first index and a detection time when the operation is detected, and an execution means for executing communication processing through the selected communication service using the address information associated with the first index as a destination.

A terminal device according to a third exemplary aspect of the present invention includes a detection means for detecting an operation that selects arbitrary two positions on a display unit when a first index and a second index are displayed on the display unit and moves the two selected positions in the same direction, and an execution means for executing scrolling of a whole display content displayed on the display unit regardless of whether each of the two selected positions is a display position of the first index or the second index, when the operation is detected by the detection means.

A method for controlling a terminal device according to a fourth exemplary aspect of the present invention includes displaying a first index associated with first data and a second index associated with second data at positions distant from each other on a display unit, detecting which of a first operation that brings the first index and the second index together and a second operation that moves one of the first index and the second index to a display position of the other one an operation on the first index and the second index is, and executing first processing using the first data and the second data when the first operation is detected, and executing second processing different from the first processing using the first data and the second data when the second operation is detected.

A control program according to a fifth exemplary aspect of the present invention causes a computer to execute display control processing of displaying a first index associated with address information of an external sender received from the sender through a first communication service and time information related to the reception and a second index different from the first index at positions distant from each other on a display unit, detection processing of detecting an operation on the first index and the second index, selection processing of selecting one of the first communication service and a second communication service different from the first communication service based on the time information associated with the first index and a detection time when the operation is detected, and communication processing of performing communication through the selected communication service using the address information associated with the first index as a destination.

### Advantageous Effects of Invention

According to the exemplary aspects of the present invention, it is possible to provide a terminal device, a control method for a terminal device, and a control program that enable a series of processing on a plurality of indexes to be performed easily with an intuitive operation.

### Brief Description of Drawings

Fig. 1 is a block diagram showing a configuration of a terminal device according to a first exemplary embodiment of the present invention.
Fig. 2 is a flowchart showing a flow of a control process of the terminal device according to the first exemplary embodiment of the present invention.
Fig. 3 is a diagram showing an example of a bringing-together operation according to the first exemplary embodiment of the present invention.
Fig. 4 is a diagram showing an example of a moving operation according to the first exemplary embodiment of the present invention.
Fig. 5 is a block diagram showing a hardware configuration of a terminal device according to the first exemplary embodiment of the present invention.
Fig. 6 is a block diagram showing a configuration of a terminal device according to a second exemplary embodiment of the present invention.
Fig. 7 is a diagram to illustrate a concept of data in a storage device according to the second exemplary embodiment of the present invention.
Fig. 8 is a diagram showing an example of mixed display of internal data and external data and an operation according to the second exemplary embodiment of the present invention.
Fig. 9 is a flowchart showing an overall flow of a control process of the terminal device according to the second exemplary embodiment of the present invention.
Fig. 10 is a flowchart showing a flow of an operation determination process according to the second exemplary embodiment of the present invention.
Fig. 11 is a flowchart showing a flow of a specific example of an operation determination process according to the second exemplary embodiment of the present invention.
Fig. 12 is a flowchart showing a flow of an internal and external data mixed display process according to the second exemplary embodiment of the present invention.
Fig. 13 is a block diagram showing a configuration of a terminal device according to a third exemplary embodiment of the present invention.
Fig. 14 is a flowchart showing a flow of a control process of the terminal device according to the third exemplary embodiment of the present invention.
Fig. 15 is a block diagram showing a configuration of an information system according to a fourth exemplary embodiment of the present invention.
Fig. 16 is a diagram to illustrate a concept of data in a storage device according to the fourth exemplary embodiment of the present invention.
Fig. 17 is a flowchart showing a flow of a control process of the terminal device according to the fourth exemplary embodiment of the present invention.
Fig. 18 is a block diagram showing a configuration of a terminal device according to a fifth exemplary embodiment of the present invention.
Fig. 19 is a flowchart showing a flow of a control process of the terminal device according to the fifth exemplary embodiment of the present invention.
Fig. 20 is a diagram showing an example of a scroll operation according to the fifth exemplary embodiment of the present invention.

### Description of Embodiments

Specific exemplary embodiments of the present invention will be described hereinafter in detail with reference to the drawings. It is noted that in the description of the drawings, the same elements will be denoted by the same reference symbols and redundant description will be omitted to clarify the explanation.

### <First exemplary embodiment of the invention>

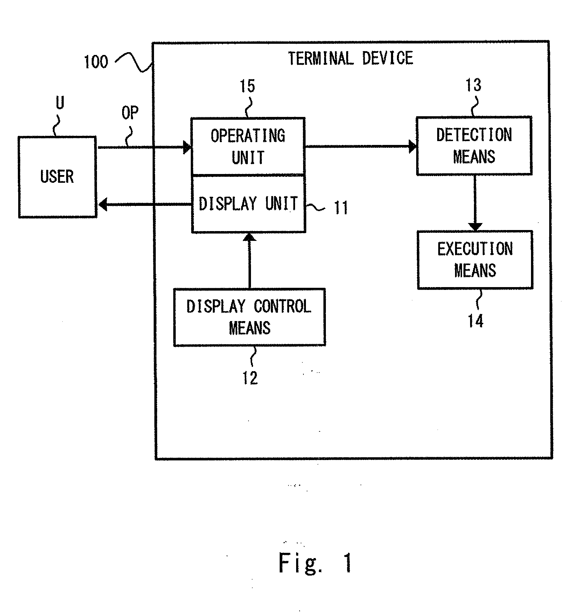

Fig. 1 is a block diagram showing a configuration of a terminal device 100 according to a first exemplary embodiment of the present invention. The terminal device 100 includes a display unit 11, an operating unit 15, a display control means 12, a detection means 13, and an execution means 14. The display unit 11 is a device that has a screen to display data. The operating unit 15 is a device that can receive an operation OP from a user U and has a means (for example, a touch panel, an approach sensor etc.) for detecting a contact or an approach of an operating object (for example, a user's finger, a pen etc.) to the operating unit 15. The operating unit 15 detects a contact or an approach of an operating object (a user's finger, a pen etc.) and transmits a detection result (whether there is a contact or an approach, a position of a contact or an approach, a path of a contact or an approach etc.) to the detection means 13. The display control means 12 displays a first index with which first data is associated and a second index with which second data is associated at positions distant from each other. Note that the index may be image data such as an icon, selectable object data or the like, for example. In other words, the index is data that defines a certain area of the screen. Further, the first data and the second data are arbitrary data such as image data, text data, position information and the like, for example.

The detection means 13 detects whether the operation OP by the user U on the first index and the second index is a first operation that brings the first index and the second index together or a second operation that moves one of the first index and the second index to a display position of the other one based on display positions of the first index and the second index displayed on the display unit 11 and the detection result (whether there is a contact or an approach, a position of a contact or an approach, a path of a contact or an approach etc.) detected by the operating unit 15. The execution means 14 executes first processing using the first data and the second data when the first operation is detected, and executes second processing, which is different from the first processing, using the first data and the second data when the second operation is detected.

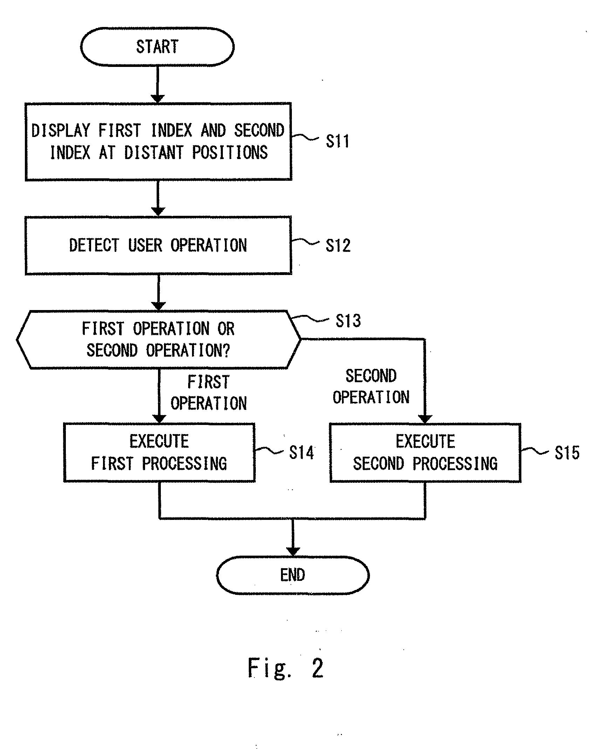

Fig. 2 is a flowchart showing a flow of a control process of the terminal device according to the first exemplary embodiment of the present invention. First, the display control means 12 displays the first index and the second index at positions distant from each other on the display unit 11 (S11). Next, the user U performs the operation OP on the first index and the second index displayed on the display unit 11 using the operating unit 15. The detection means 13 detects the operation OP of the user U (S12).

Then, the execution means 14 determines whether the detected operation OP is the first operation or the second operation (S13). When the operation OP is an operation to bring the first index and the second index close to each other, the execution means 14 determines that it is the first operation. Thus, the first operation is an operation that brings the first index and the second index together. On the other hand, when the operation OP is an operation to move the first index to the display position of the second index or an operation to move the second index to the display position of the first index, the execution means 14 determines that it is the second operation. Thus, the second operation is an operation that moves one index to the display area of the other index.

After that, the execution means 14 executes first processing when it determines that the operation OP is the first operation (S14). The first processing may be arbitrary processing using first data associated with the first index and second data associated with the second index. For example, the first processing can be processing that stores the first data and the second data in association with each other into a storage device (not shown).

On the other hand, the execution means 14 executes second processing when it determines that the operation OP is the second operation (S 15). The second processing is different processing from the first processing. The second processing may be arbitrary processing using the first data and the second data. For example, when the second data is information indicating the address of another terminal device (not shown), the second processing can be processing that transmits the first data to the address indicated by the second data, which is, to another terminal device. Alternatively, the second processing may start up a screen to create an e-mail to the address indicated by the second data, not including data transmission.

Note that, although the processing that stores the first data and the second data in association with each other into a storage device is performed in the case of the first operation, which is the bringing-together operation, and the processing that transmits the first data to the address indicated by the second data is performed in the case of the second operation, which is the moving operation, in the above example, it is not limited thereto. Specifically, any processing according to the first index and the second index may be performed in the case of the bringing-together operation, and any processing according to the first index and the second index and different from the case of the bringing-together operation may be performed in the case of the moving operation. Thus, the first processing and the second processing can be interchanged.

Therefore, the first processing and the second processing can be any processing related to the two data associated with the two indexes. For example, by defining processing using each single index and processing using both indexes as a series of processing as the first processing and the second processing, it is possible to execute a series of processing in one operation OP by the user U. This facilitates the operation.

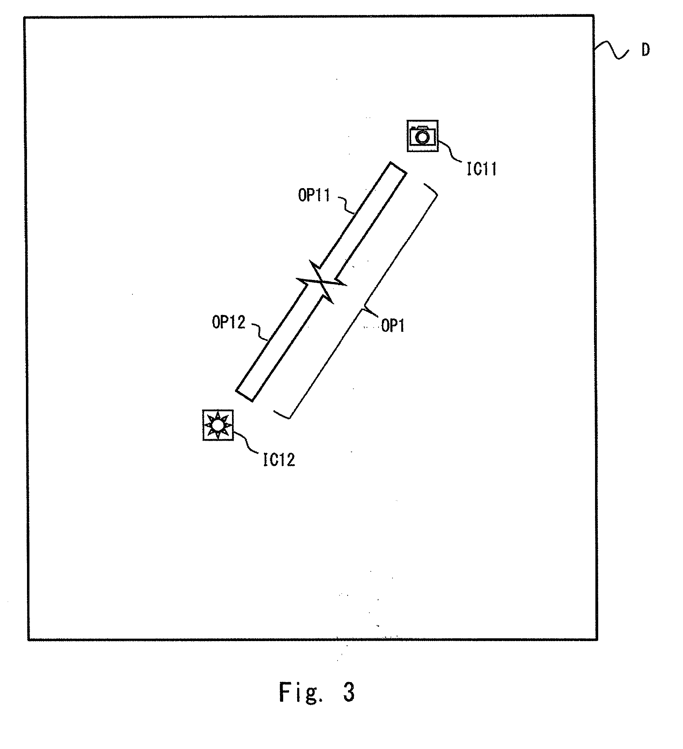

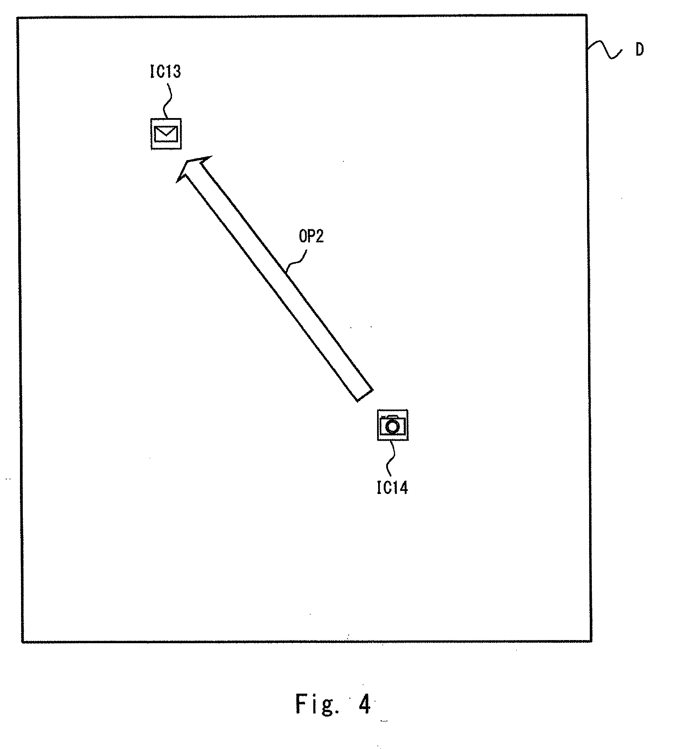

Further, both of the first operation and the second operation are intuitive operations that move the display areas of the two indexes physically distant from each other on top of each other by dragging the finger or the like across the screen. Figs. 3 and 4 illustrate specific images of the bringing-together operation and the moving operation.

Fig. 3 is a diagram showing an example of a bringing-together operation according to the first exemplary embodiment of the present invention. In Fig. 3, two indexes; an index IC 11 and an index IC 12, are displayed at the positions distant from each other on a screen D. The index IC 11 and the index IC 12 are icons in this example. Then, a contact is made to the vicinity of the display position of the index IC 11 by one finger of the user U, and the detection means 13 detects that the index IC 11 is selected. Further, a contact is made to the vicinity of the display position of the index IC 12 by another finger of the user U within a specified time period from the contact to the index IC 11, and the detection means 13 detects that the index IC 12 is selected. After that, the user U performs an operation to bring the respective fingers together. Specifically, an operation OP 11 that slides the index IC 11 closer to the index IC 12 is performed, and an operation OP 11 that slides the index IC 12 closer to the index IC 11 is performed. Then, the detection means 13 detects that the display areas of the index IC 11 and the index IC 12 overlap and thereby detects that the bringing-together operation is done. Note that an example of the bringing-together operation is an operation that touches a weather information icon with a thumb and touches a camera image icon with an index finger and then closes the fingers.

Fig. 4 is a diagram showing an example of a moving operation according to the first exemplary embodiment of the present invention. In Fig. 4, two indexes; an index IC 13 and an index IC 14, are displayed at the positions distant from each other on the screen D. The index IC 13 and the index IC 14 are icons in this example. Then, a contact is made to the vicinity of the display position of the index IC 13 by one finger of the user U, and the detection means 13 detects that the index IC 13 is selected. After that, the user U performs an operation to move the finger closer to the index IC 14. In other words, an operation OP2 that slides the index IC 13 closer to the index IC 14 is performed. Then, the detection means 13 detects that the display areas of the index IC 13 and the index IC 14 overlap and thereby detects that the moving operation is done. Note that an example of the moving operation is an operation that touches a camera image icon with an index finger and slides the index finger to an email icon.

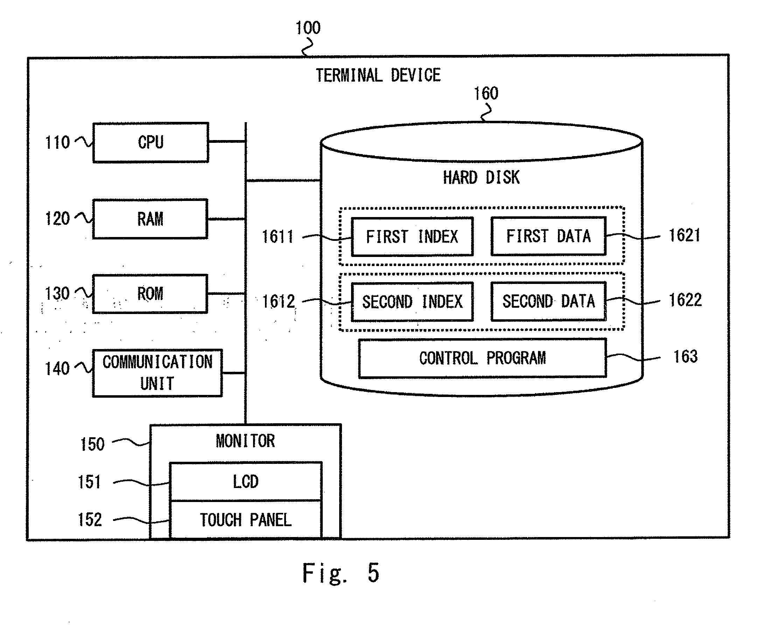

Fig. 5 is a block diagram showing a hardware configuration of a terminal device according to the first exemplary embodiment of the present invention. The terminal device 100 includes a CPU (Central Processing Unit) 110, RAM (Random Access Memory) 120, ROM (Read Only Memory) 130, a communication unit 140, a monitor 150, and a hard disk 160.

The monitor 150 includes an LCD 151 for displaying an index, data and the like and a touch panel 152 for accepting the operation OP from the user U. The LCD 151 is an example of the display unit 11, and the touch panel 152 is an example of the operating unit 15. The hard disk 160 is a nonvolatile storage device. The hard disk 160 stores OS (not shown), first index 1611 and 1612, first data 1621 and 1622, and a control program 163.

The first data 1621 is associated with the first index 1611, and the second data 1622 is associated with the second index 1612. Further, the control program 163 is a computer program to implement a control process (for example, the process of Fig. 2) according to the first exemplary embodiment of the present invention.

The CPU 110 controls various kinds of processing in the terminal device 100, access to the RAM 120, the ROM 130, the communication unit 140, the monitor 150 and the hard disk 160 and the like. The communication unit 140 performs communication with the outside, such as transmitting and receiving data.

In the terminal device 100, the CPU 110 reads the OS or the control program 163 stored in the RAM 120, the ROM 130 or the hard disk 160 and executes it. The terminal device 100 can thereby implement the control process according to the first exemplary embodiment of the present invention.

According to the first exemplary embodiment of the present invention described above, it is possible to perform a plurality of processing corresponding to the first index and the second index easily with an intuitive operation. Specifically, both of the first operation and the second operation are operations on the first index and the second index, and one of different processing (the first processing and she second processing) can be selectively performed according to the detail of the operation. For example, the terminal device according to the first exemplary embodiment of the present invention changes its action according to the operation on the two icons on the screen.

Note that the operation detected by the operating unit 15 includes not only a contact operation using a contact detection device such as a touch panel but also a proximity operation using a proximity detection device such as a proximity sensor, which is an operation performed by moving a finger at a short distance from the screen. Further, the operating unit 15 is not limited to a touch panel or a proximity sensor on the screen, and it may be a touch panel or a proximity sensor not on the screen, such as a touch pad on a keyboard of a notebook PC. In other words, the operating unit 15 may be the one in which the display unit and the operating unit are separated from each other, not limited to the one in which the display unit and the operating unit are integrated together.

### <Second exemplary embodiment of the invention>

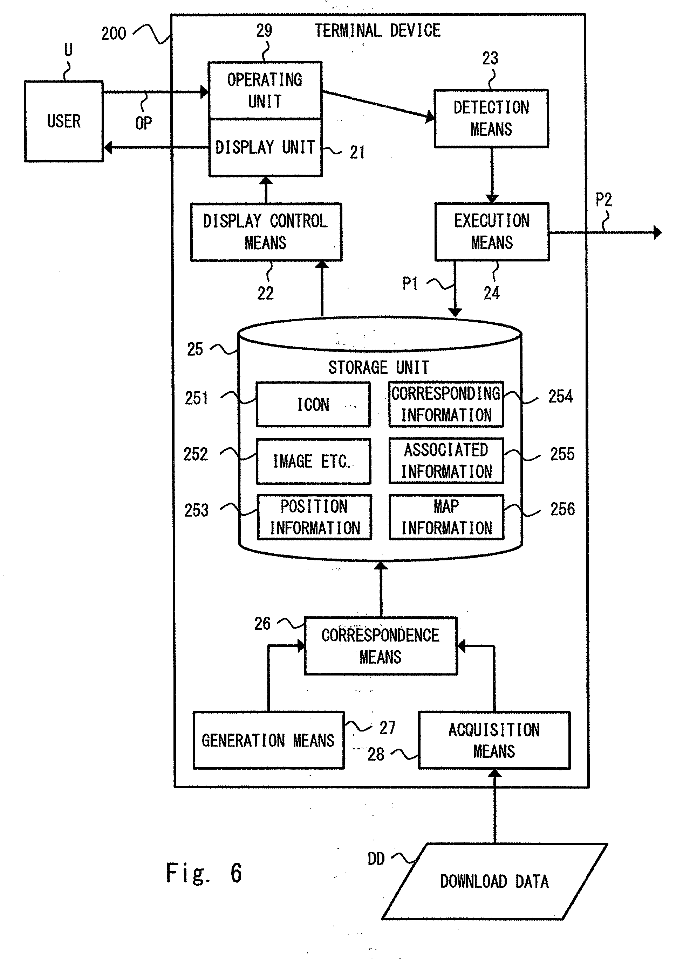

Fig. 6 is a block diagram showing a configuration of a terminal device 200 according to a second exemplary embodiment of the present invention. The terminal device 200 includes a display unit 21, an operating unit 29, a display control means 22, a detection means 23, an execution means 24, a storage unit 25, a correspondence means 26, a generation means 27, and an acquisition means 28. The terminal device 200 is one example of the terminal device 100 described above. Differences from the first exemplary embodiment are mainly described below.

The storage unit 25 is a storage device that stores an icon 251, an image etc. 252, position information 253, corresponding information 254, associated information 255 and map information 256. The icon 251 is an example of the index, and it is image data. The image etc. 252 is data to be processed, such as image data and text data. The position information 253 is data indicating a position on the map information 256, and it is coordinates, for example. The corresponding information 254 is information that defines the correspondence among the icon 251, the image etc. 252 and the position information 253 as one set. The associated information 255 is information that defines a combination between a plurality of image etc. 252. The map information 256 is arbitrary map data. For example, the map information 256 is a map of an area including the current position of the terminal device 200.

The detection means 23 has the following functions in addition to the function of the detection means 13. Specifically, when the operating unit 29 detects that the display areas of the first index and the second index overlap, the detection means 23 detects the operation OP as the first operation if the display areas of the first index and the second index are moving by a slide operation, and the detection means 23 detects the operation OP as the second operation if the display area of one of the first index and the second index is moving to the display area of the other index by a slide operation and the display area of the other index is not moving. Thus, the two indexes are selected, and normal processing is performed during sliding and, at the timing when the display areas of the two indexes overlap, the operation on each index performed previously is checked to determine whether it is the first operation or the second operation. It is thereby possible to effectively detect whether the operation OP is the first operation, which is the bringing-together operation, or the second operation, which is the moving operation.

Note that, when the operation OP of the user U on the first index and the second index is detected in the detection means 23, the execution means 24 may select one of the first processing and the second processing based on a combination of the types of the first index and the second index or an attribute of the first data or the second data and execute the selected one. For example, when the type of the first index is an image icon and the type of the second index is a schedule icon, processing that associates image data and schedule data can be selected. Further, when the type of the first index is an image icon and the type of the second index is an email icon, processing that sends image data via email can be selected. Alternatively, the execution means 24 may select processing according to which of an image, a schedule and an email the attribute of each data associated with the icon is and its combination. It is thereby possible to selectively execute various kinds of processing according to a combination of the indexes or a combination of data even for the same operation. It is thus possible to implement a plurality of processing with one operation.

Further, it is assumed that different position information 253 are respectively associated in advance with the icons 251 indicating the first index and the second index. The display control means 22 displays the map information 256 on the display unit 21 and displays the first index and the second index at the positions on the map data corresponding to the position information 253 respectively associated thereto. It is thereby possible to display various kinds of indexes at the positions distant from each other on the map data, which allows a user to easily distinguish between them.

Further, the execution means 24 performs, as the first processing, an association process P1 that stores the first data and the second data in association with each other into the storage unit. It is thereby possible to obtain an intuitive result for a user that equally associates the data corresponding to the two indexes from the operation of bringing those indexes together.

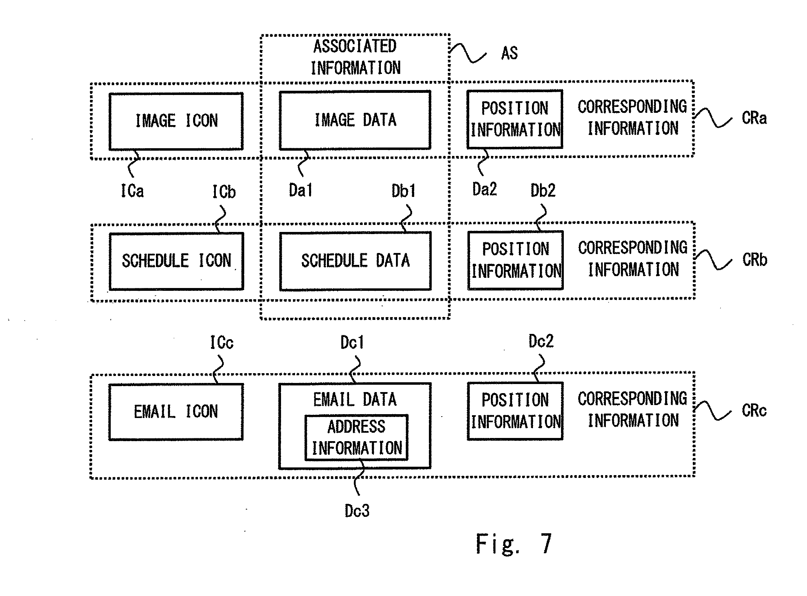

Fig. 7 is a diagram to illustrate a concept of data in a storage device according to the second exemplary embodiment of the present invention. Corresponding information CRa indicates that an image icon ICa, image data Da1 and position information Da2 correspond to one another. Further, corresponding information CRb indicates that a schedule icon ICb, schedule data Db1 and position information Db2 correspond to one another. Further, corresponding information CRc indicates that an email icon ICc, email data Dc1 and position information Dc2 correspond to one another. The email data Dc1 is text data as a header and a body of an email to the user U using the terminal device 200, which is received from the outside, for example, The email data Dc1 contains address information Dc3, which is the address of the sender of the email.

The associated information AS is information that defines the association established between the image data Da1 and the schedule data Db1. For example, when the bringing-together operation is performed for the image icon ICa and the schedule icon ICb by the operation OP of the user U, the execution means 24 performs an association process P1 that associates the image data Da1 corresponding to the image icon ICa and the schedule data Db1 corresponding to the schedule icon ICb and stores them as the associated information AS into the storage unit 25.

As a result, when the user U selects one icon after the association is established, it is possible to easily refer to the data corresponding to the other icon associated with the selected one. It is thereby possible to perform processing related to data such as data deletion or data transmission for the associated two data in one operation.

For example, when a plurality of images are associated with each other, when displaying one image, the other image associated thereto can be also displayed. Those images may be deleted altogether if a deletion operation is performed at this time.

Further, when displaying one image, the other image associated thereto can be displayed as well, and those images may be sent altogether as email attachment if an operation to send them as email attachment is performed.

Further, when schedule data and weather information are associated with each other, if the user U deletes the schedule data because the schedule data is no longer needed, the weather information associated thereto may be also deleted.

Further, when at least one of the first data and the second data is information indicating an address in data transmission, the execution means 24 performs processing to transmit the other data to the address indicated by one of the first data and the second data as the second processing. For example, the execution means 24 performs an email sending process P2 as the second processing. It is normally necessary to perform a plurality of operations such as specifying address information, creating data to be transmitted and instructing transmission, for example, for an operation for communication. Thus, in the second exemplary embodiment of the present invention, the above-described moving operation is used as an operation for communication. It is thereby possible to specify the destination and the data to be sent with an intuitive operation, and communication processing can be achieved with a user-friendly operation.

Further, the process can be achieved with an easy operation of sliding from a certain icon to another icon. For example, in the case of Fig. 7, the image icon ICa slides to the email icon ICc by the operation OP of the user U, and when the image icon ICa and the email icon ICc overlap, the email sending process P2 that sends an email to which the image data Da1 corresponding to the image icon ICa is attached to the address information Dc3 corresponding to the email icon ICc is executed.

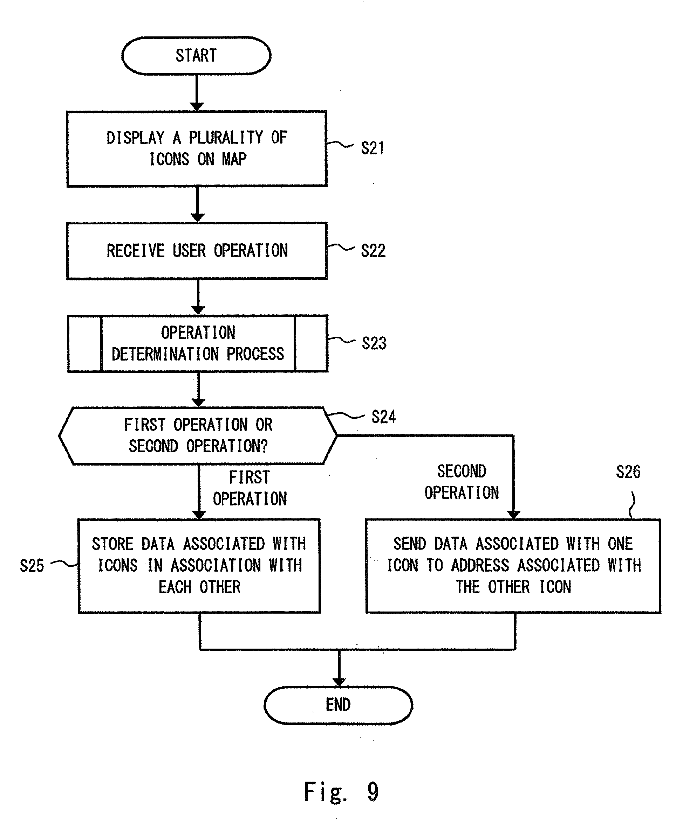

Fig. 9 is a flowchart showing an overall flow of a control process of the terminal device according to the second exemplary embodiment of the present invention. First, the display control means 22 reads the map information 256 from the storage unit 25 and displays it on the display unit 21. Next, the display control means 22 reads the icon 251 and the position information 253 from the storage unit 25 and displays a plurality of icons on the map in the display unit 21 based on the coordinates indicated by the position information 253 (S21).

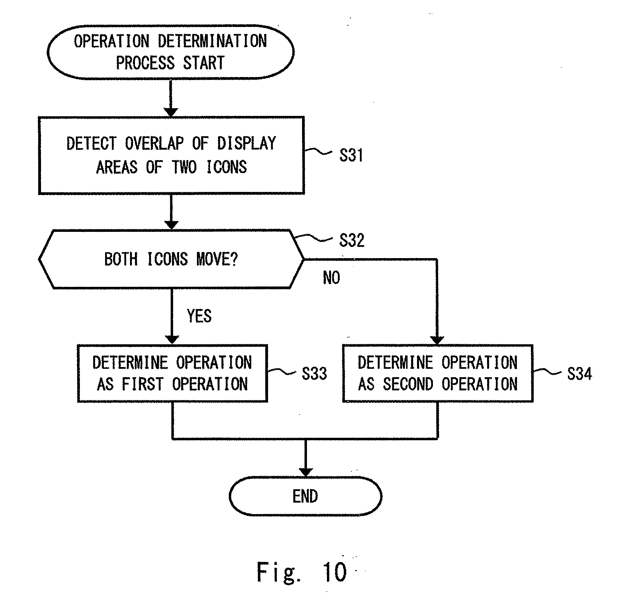

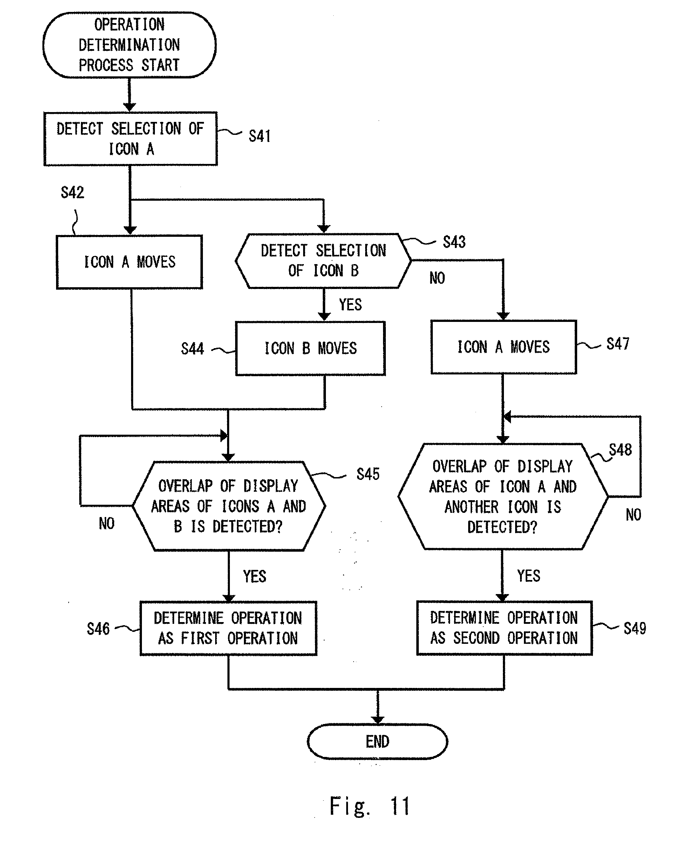

Then, the terminal device 200 receives the operation OP of the user U through a touch panel or the like of the operating unit 29 (S22). The detection means 23 then performs the operation determination process (S23). The details of the operation determination process are described later with reference to Figs. 10 and 11.

As a result of the operation determination process, the execution means 24 determines whether the operation OP is the first operation or the second operation (S24). When the operation OP is determined as the first operation in Step S24, the execution means 24 performs the association process P1. Specifically, the execution means 24 associates the data corresponding to the respective icons and stores them as the associated information 255 into the storage unit 25 (S25). On the other hand, when the operation OP is determined as the second operation in Step S24, the execution means 24 performs the email sending process P2. Specifically, the execution means 24 sends the data corresponding to one icon to the address corresponding to the other icon (S26).

Fig. 10 is a flowchart showing a flow of an operation determination process according to the second exemplary embodiment of the present invention. First, the operating unit 29 detects overlap of the displays areas of the two icons (S31). Specifically, before the operation OP is performed, the two icons are placed distant from each other on the display unit 21. After that, it is detected that the display areas of the two icons overlap by the operation OP.

Then, the detection means 23 determines whether the both icons have moved or not (S32). Specifically, it is determined whether, in the process that the displays areas of the two icons overlap, both of the two icons slide to become closer to each other. To put it the other way around, it is determined whether only one icon slides to become closer to the other icon.

When it is determined in Step S32 that the both icons have moved, the detection means 23 determines that the operation OP is the first operation (S33). On the other hand, when it is determined in Step S32 that only one icon has moved, the detection means 23 determines that the operation OP is the second operation (S34).

Fig. 11 is a flowchart showing a flow of a specific example of an operation determination process according to the second exemplary embodiment of the present invention. Fig. 11 shows one example of the case of implementing the process of Fig. 10 specifically. Note that the operation OP of the user U on the icon A and the icon B is detected in the following example.

First, the user U performs an operation of touching the icon A, which is one of a plurality of icons on the display unit 21, with a finger. The operating unit 29 then detects selection of the icon A (S41). Next, the user U slides the finger touching the display unit 21 toward the icon B. The icon A thereby moves (S42).

Further, in parallel with Step S42, the detection means 23 determines whether the operating unit 29 has detected selection of the icon B (S43). When selection of the icon B is detected, it means that the user U has performed an operation of touching the icon B on the display unit 21 with another finger. Then, the user U slides that finger touching the display unit 21 toward the icon A. The icon B thereby moves (S44).

Then, the detection means 23 determines whether the operating unit 29 has detected overlap of the display areas of the icons A and B (S45). In other words, it determines whether the both icons overlap by the bringing-together operation. When the overlap is not detected in Step S45, the detection means 23 performs Step S45 again after waiting for a specified period of time. When the overlap is detected in Step S45, the detection means 23 determines the operation OP as the first operation (S46).

When selection of the icon B is detected in Step S43, it means that the user U slides only the icon A. The icon A thereby moves (S47). Then, the detection means 23 determines whether overlap of the display areas of the icon A and the other icon is detected (S48). In other words, it determines whether one icon has reached the display area of the other icon by the moving operation. When the overlap is not detected in Step S48, the detection means 23 performs Step S48 again after waiting for a specified period of time. When the overlap is detected in Step S48, the detection means 23 determines the operation OP as the second operation (S49).

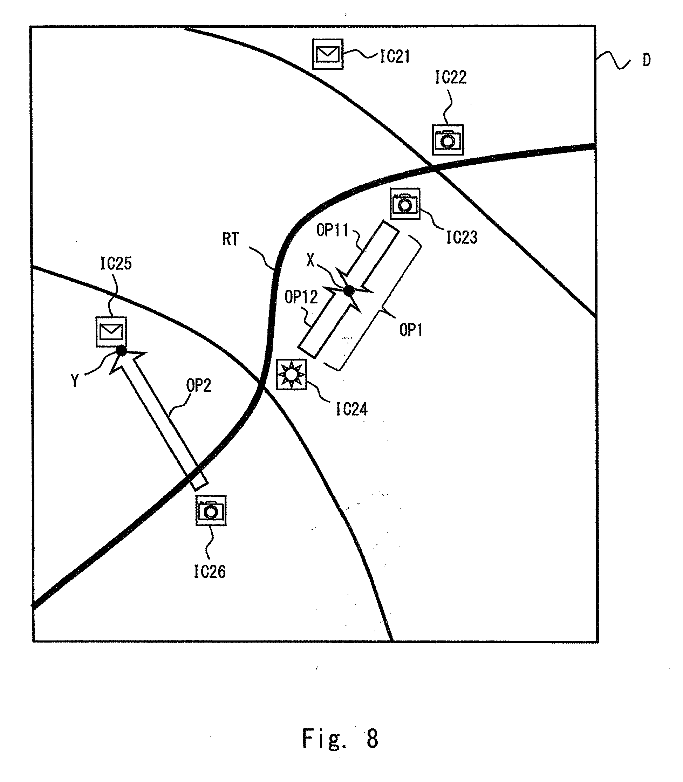

Fig. 8 is a diagram showing an example of mixed display of internal data and external data and an operation according to the second exemplary embodiment of the present invention. For example, when the user U selects the icon IC23 and the icon IC24 and performs an operation of bringing the icon IC23 and the icon IC24 together by the operation OP11 and the operation OP 12, the detection means 23 detects the overlap position X of the display areas (Step S31 in Fig. 10, Step S45 in Fig. 11). At this time, the icon IC23 and the icon IC24 both move, and therefore it is determined as the bringing-together operation OP1 (Step S33 in Fig. 10, Step S46 in Fig. 11).

On the other hand, when the user U performs the moving operation OP2 that selects only the icon IC26 and slides it to the icon IC25, the operating unit 29 detects the overlap position Y of the display areas (Step S31 in Fig. 10, Step S48 in Fig. 11). At this time, only the icon IC25 moves, and therefore it is determined as the moving operation OP2 (Step S34 in Fig. 10, Step S49 in Fig. 11).

Referring back to Fig. 6, the generation means 27 generates data in the terminal device 200. For example, the generation means 27 is an application having a text input function or an application that generates image data by the camera function or the like. Further, the acquisition means 28 acquires download data DD from an external terminal device (not shown) or the like.

The correspondence means 26 associates the first index and the first position information with the first data generated in the terminal device 200, and associates the second index and the second position information distant from the first position information with the second data acquired from the outside. In this example, the first data is data generated by the generation means 27, and it is referred to as internal data. Further, the second data is data acquired by the acquisition means 28, and it is referred to as external data. In this case, the display control means 22 displays the first index on the display unit 21 based on the first position information, and displays the second index on the display unit 21 based on the second position information. Thus, the display control means 22 can display the internal data and the external data in a mixed manner on the display unit 21.

In general, the external data and the internal data are managed separately from each other, which complicates an operation for processing related to each data. For example, an application to be processed is different between the external data and the internal data. Thus, it is necessary to start a certain application for referring to the external data and further start another application for referring to the internal data. By displaying the external data and the internal data in a mixer manner, it is possible to easily perform processing related to the external data and the internal data.

For example, as shown in Fig. 8, the icon IC21 and the icon IC25 are icons associated with email data acquired from the outside by the acquisition means 28, which is the external data. The icon IC24 is also an icon associated with weather information acquired from the outside. On the other hand, the icons IC22, IC23 and IC26 are icons associated with image data generated by the generation means 27, which is the internal data. Thus, in Fig. 8, the internal data and the external data are displayed in a mixed way.

The bringing-together operation OP1 and the moving operation OP2 are both operations on a combination of the internal data and the external data. Because the internal data and the external data are displayed in a mixed manner in the second exemplary embodiment of the invention, it is possible to perform an intuitive and easy operation on the both data.

Further, it is desirable to allow distinction between the external data and the internal data when displaying them in a mixed manner. For example, it is desirable that a frame thickness, color and the like are different between the external data and the internal data. It is thereby possible to easily discriminate between the external data and the internal data. For example, the icon of the internal data may have a thick frame, and the icon of the external data may have a thin frame. Further, the icon of the internal data may be blue, and the icon of the external data may be read. An example of mixed display is not limited thereto.

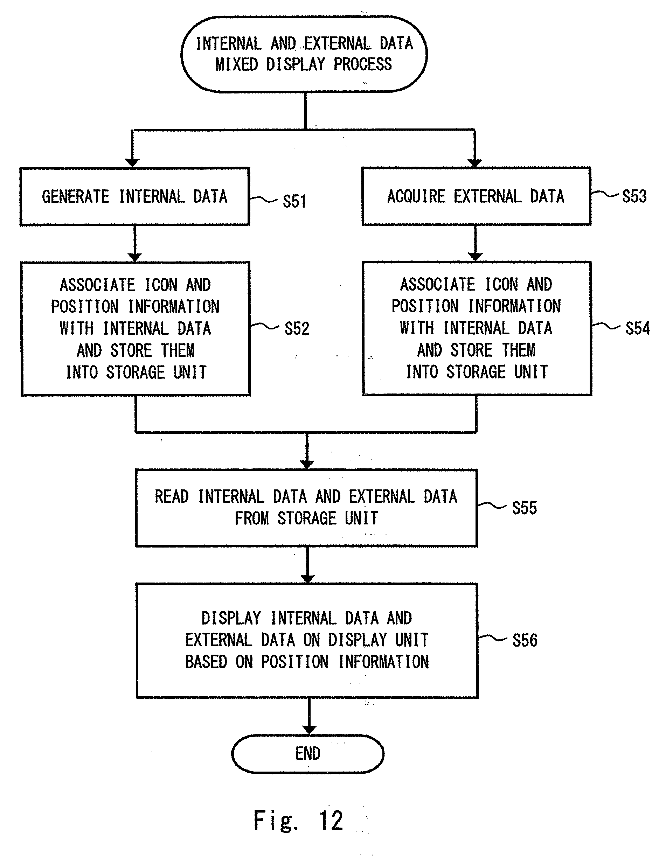

Fig. 12 is a flowchart showing a flow of an internal and external data mixed display process according to the second exemplary embodiment of the present invention. First, the generation means 27 generates internal data (S51). Next, the correspondence means 26 associates an icon and position information with the internal data and stores them as the corresponding information 254 into the storage unit 25 (S52).

Further, the acquisition means 28 acquires external data (S53). Then, the correspondence means 26 associates an icon and position information with the internal data and stores them as the corresponding information 254 into the storage unit 25 (S54).

After that, the display control means 22 reads the internal data and the external data from the storage unit 25 (S55). Then, the display control means 22 displays the internal data and the external data on the display unit 21 based on the position information (S56).

There are wide applications for displaying the external data and the internal data in a mixed manner and then performing processing related to the external data and the internal data as described above, compared with performing processing related to the internal data and the internal data independently of each other.

### <Third exemplary embodiment of the invention>

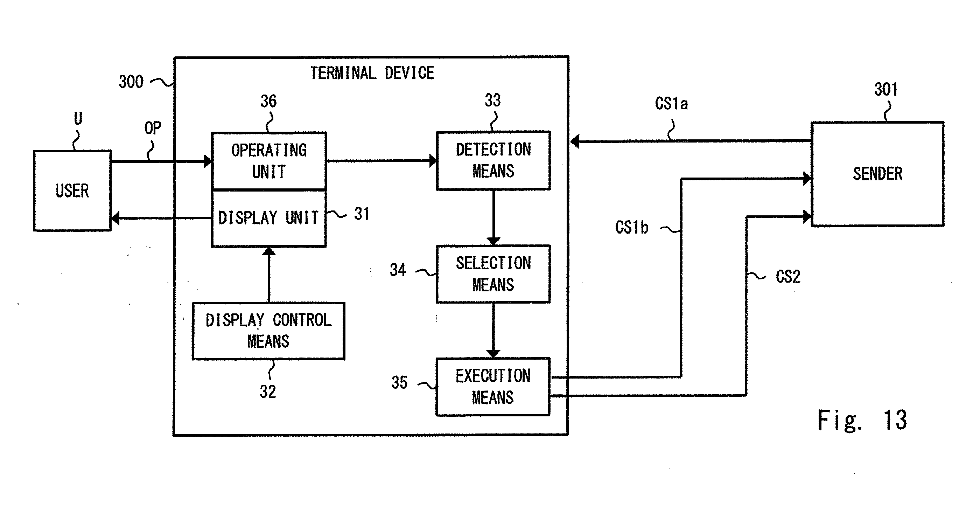

Fig. 13 is a block diagram showing a configuration of a terminal device 300 according to a third exemplary embodiment of the present invention. The terminal device 300 switches a process based on information associated with each index when receiving an operation on a plurality of indexes. The terminal device 300 includes a display unit 31, an operating unit 36, a display control means 32, a detection means 33, a selection means 34, and an execution means 35. The display unit 31 is a device that can accept the operation OP performed by the user U on the screen that displays data to be output. The display unit 31 has a touch panel or the like, for example.

The display control means 32 displays the first index with which address information of an external sender 301 received from the sender 301 through a first communication service CS1a and time information related to the reception are associated and the second index different from the first index at positions distant from each other on the display unit 31. Note that the index may be image data such as an icon, selectable object data or the like, for example. In other words, the index is data that defines a certain area of the screen. Further, the first data and the second data are arbitrary data such as image data, text data, position information and the like, for example.

The detection means 33 detects the operation OP by the user U on the first index and the second index. When the detection means 33 detects the operation OP, it selects one of a first communication service CS1b or a second communication service CS2 different from the first communication service based on the time information associated with the first index and the detection time. The execution means 35 performs communication through the selected communication service, using the address information associated with the first index as the destination.

Note that the communication service is the concept including the whole service related to a communication application or a system that performs communication of electronic information, not limited to the communication standard or the communication line for data communication. For example, the communication service includes a telephone, FAX, an email, an electronic bulletin board, a simple blog and the like, through not limited thereto.

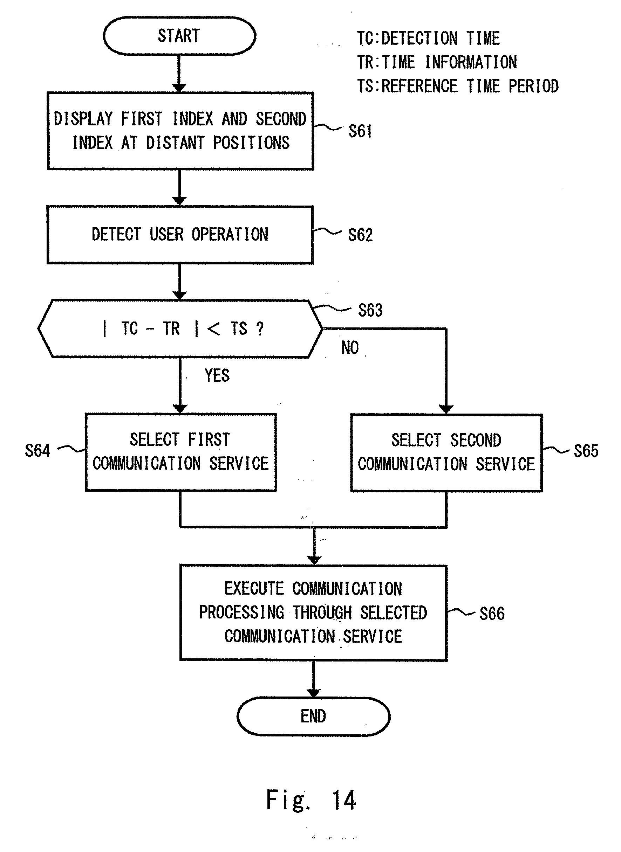

Fig. 14 is a flowchart showing a flow of a control process of the terminal device according to the third exemplary embodiment of the present invention. First, the display control means 32 displays the first index and the second index at positions distant from each other on the display unit 31 (S61). Next, the user U performs the operation OP on the first index and the second index displayed on the display unit 31. The detection means 33 then detects the operation OP of the user U (S62).

Then, the selection means 34 determines whether a difference between the detection time TC and the time information TR is less than a reference time period TS or not (S63). When it is determined in Step S63 that the difference is less than the reference time period TS, the selection means 34 selects the first communication service (S64). On the other hand, when it is determined in Step S63 that the difference is equal to or more than the reference time period TS, the selection means 34 selects the second communication service (S65). After that, the execution means 35 performs communication processing through the selected communication service (S66).

As described above, the terminal device 300 compares the time related to the data received from the sender 301 with the detection time, which is the current time, for example, and thereby selects whether to use the same communication service as the one used for the data received from the sender 301 or another communication service. It is thereby possible to automatically select an appropriate communication service according to a difference in time. It is thus possible to perform processing to send a response to the received data without aware of a communication service.

### <Fourth exemplary embodiment of the invention>

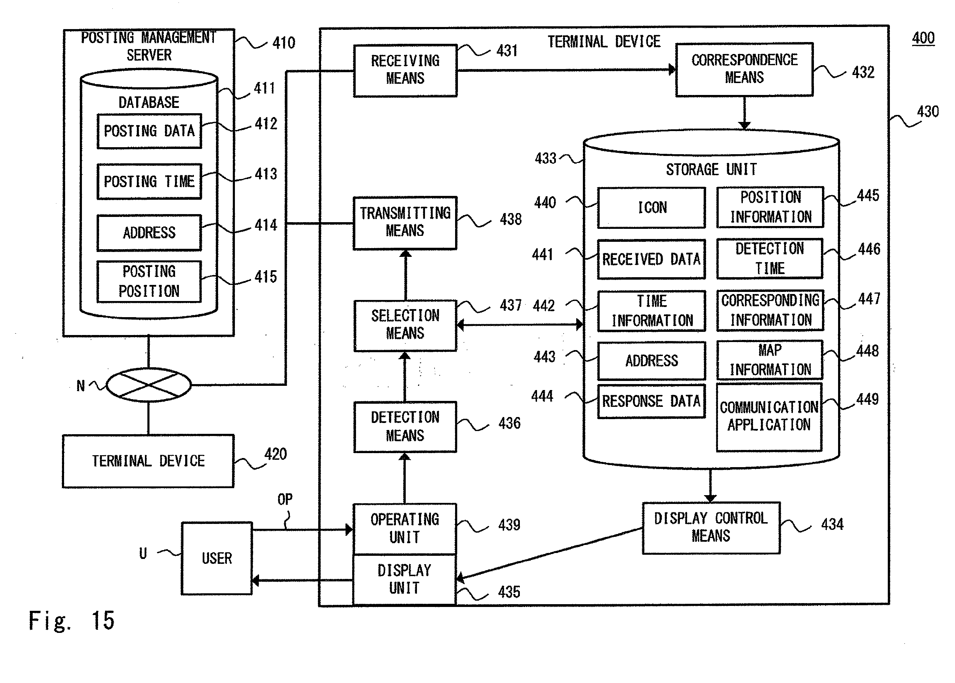

Fig. 15 is a block diagram showing a configuration of an information system 400 according to a fourth exemplary embodiment of the present invention. The information system 400 includes a posting management server 410, a terminal device 420 and a terminal device 430, which are connected through a network N. The network N is a communication network such as the Internet, an intranet, a public network, a private line or a mobile communication network.

The posting management server 410 provides a message posting service such as a simple blog. The posting management server 410 at least includes a database 411. The database 411 at least stores posting data 412, posting time 413, address 414 and posting position 415, which are associated with one another. The posting data 412 is text data indicating a message to be posted which is entered by a poster through the terminal device 420 or 430. The posting time 413 is the time when the posting data 412 is posted, and it is the time when the data is uploaded to the posting management server 410, for example. The address 414 is identification information that uniquely identifies the terminal device or the poster by which the posting data 412 is posted. The posting position 415 is position information when the poster performs an operation on the terminal device. Note that the other components of the posting management server 410 are known and detailed description thereof is omitted. The posting management server 410 may have the functions of an email server and a network call server. Alternatively, those server functions may be implemented by another server, which is not shown.

The terminal device 430 includes a receiving means 431, a correspondence means 432, a storage unit 433, a display control means 434, a display unit 435, an operating unit 439, a detection means 436, a selection means 437, and a transmitting means 438. The terminal device 430 is one example of the terminal device 300 described above. Thus, differences from the third exemplary embodiment are mainly described hereinbelow.

The receiving means 431 receives received information such as the posting data 412, the posting time 413, the address 414 and the posting position 415 from the posting management server 410 through the network N. The received information is data posted from a terminal device (which is the terminal device 420 in this example) different from the terminal device 430. Thus, the address 414 indicates the address of the terminal device 420. Further, the receiving means 431 can receive data through any of a plurality of communication services. In this example, it is assumed that the receiving means 431 receives the received information through the message posting service.

The correspondence means 432 stores the received posting data 412, the posting time 413, the address 414 and the posting position 415 in association with a posting icon (first index) indicating a posting service into the storage unit 433. Further, when the user U creates response data to the posting data 412, that is, when the terminal device 430 generates internal data, the correspondence means 432 stores the response data and the current position of the terminal device 430 in association with a current position icon (second index) indicating the current position into the storage unit 433. It is assumed that the posting position 415 and the current position are distant from each other. Further, the types of icons used as the first index and the second index are not limited thereto.

The storage unit 433 is a storage device that stores an icon 440, received data 441, time information 442, address 443, response data 444, position information 445, detection time 446, corresponding information 447, map information 448, and a communication application 449. The icon 440 is an example of the index, and it is image data. The received data 441 corresponds to the posting data 412. The time information 442 corresponds to the posting time 413, or the time when the received information is received by the receiving means 431. The address 443 corresponds to the address 414. The response data 444 corresponds to the response data described above. The response data 444 is text data representing a response message to the posting data 412, image data or audio data obtained from the vicinity of the terminal device 430 and the like. The position information 445 corresponds to the posting position 415 and the current position of the terminal device 430, and it is coordinates on the map information 448, for example. The detection time 446 is the time when the response data 444 is generated and stored, or the current time. The corresponding information 447 is information that defines the correspondence that associates the icon 440, the received data 441 or the response data 444, the address 443, the position information 445, the time information 442 or the detection time 446 as one set. The map information 448 is arbitrary map data. For example, the map information 448 is a map of an area including the current position of the terminal device 430 and the posting position 415. The communication application 449 is software for performing communication corresponding to any one of a plurality of communication services. The communication application 449 is a client application for message posting, an email client application, a network calling application or the like, for example.

The display control means 434 reads the map information 448, the icon 440 and the position information 445 associated with the icon 440 from the storage unit 433, and puts the icon 440 at a specified position in the map information 448 based on the position information 445 and displays them on the display unit 435. At this time, the display control means 434 at least displays the posting icon and the current position icon.

The display unit 435 is a device having a screen to display data. The operating unit 439 is a device that can accept the operation OP from the user U. The operating unit 439 has a touch panel, a touch pad or the like, for example.

The detection means 436 detects the operation OP by the user U on the plurality of icons on the display unit 435. The selection means 437 refers to the storage unit 433, and when the operation OP is detected, it determines whether the time information 442 associated with the first index (which is the posting icon in this example) and the detection time 446 are within a specified time period. The selection means 437 selects the first communication service when it determines that the time information 442 and the detection time 446 are within a specified time period, and the selection means 437 selects the second communication service when it determines that the time information 442 and the detection time 446 are not within a specified time period.

When the first communication service is a posting service and it is within a specified time period from the time information, the selection means 437 selects the posting service as the communication service, and when a specified time period or more has elapsed from the time information, the selection means 437 selects the email service as the communication service.

The transmitting means 438 is an example of the execution means 35. The transmitting means 438 performs communication processing through the network N using the communication service selected by the selection means 437. At this time, the transmitting means 438 transmits the response data 444 associated with the current position icon to the address 443 associated with the posting icon.

When it is within a specified time period from the time information, it is likely that the poster is still using the posting service (first communication service). Thus, when it is within a specified time period from the time information, the transmitting means 438 posts the response data 444 using the posting service. Specifically, the transmitting means 438 transmits the response data 444 to the posting management server 410, setting the address 443 as the destination. Then, the transmitting means 438 starts the communication application 449 related to the client application for message posting and posts the response data 444. This increases the possibility that the poster can immediately view the response from the user U. It is thus likely to be processed by the poster. It is thereby possible to send a response more quickly and more directly.

On the other hand, when a specified time period or more has elapsed from the time information, it is likely that the poster has already finished using the posting service. Thus, when a specified time period or more has elapsed from the time information, the transmitting means 438 sends the response data 444 via email to the address 443 using the email service. At this time, the transmitting means 438 starts the communication application 449 related to the email client application and sends the response data 444. It is thereby possible to view the response from the user U upon email checking even before the poster starts using the posting service again.

Alternatively, when a specified time period or more has elapsed from the time information, the transmitting means 438 may start the network calling application, setting the address 443 as the destination, using the calling service. In this case, if the response data 444 is audio data, the audio data may be played. The transmitting means 438 at least starts an application for performing the selected communication service as the communication processing.

As described above, according to the fourth exemplary embodiment of the present invention, when the user U performs an operation to send a response message in response to a posting message, the response message is sent as a posting message if the posting time is close to the current time, or the response message is sent using another communication service such as an email if a specified time period or more has elapsed from to the posting time.

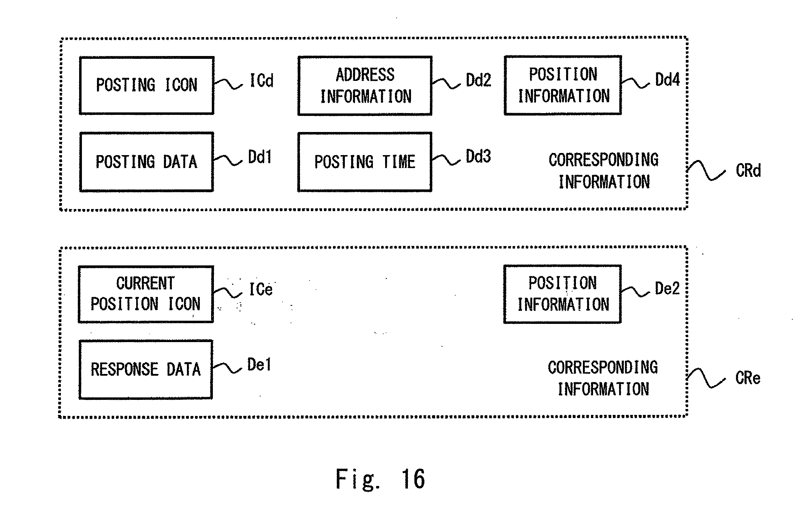

Fig. 16 is a diagram to illustrate a concept of data in a storage device according to the fourth exemplary embodiment of the present invention. The corresponding information CRd indicates that the posting icon ICd, the posting data Dd1, the address information Dd2, the posting time Dd3, and the position information Dd4 correspond to one another. Further, corresponding information CRe indicates that the response icon ICe, the response data De1 and the position information De2 correspond to one another.

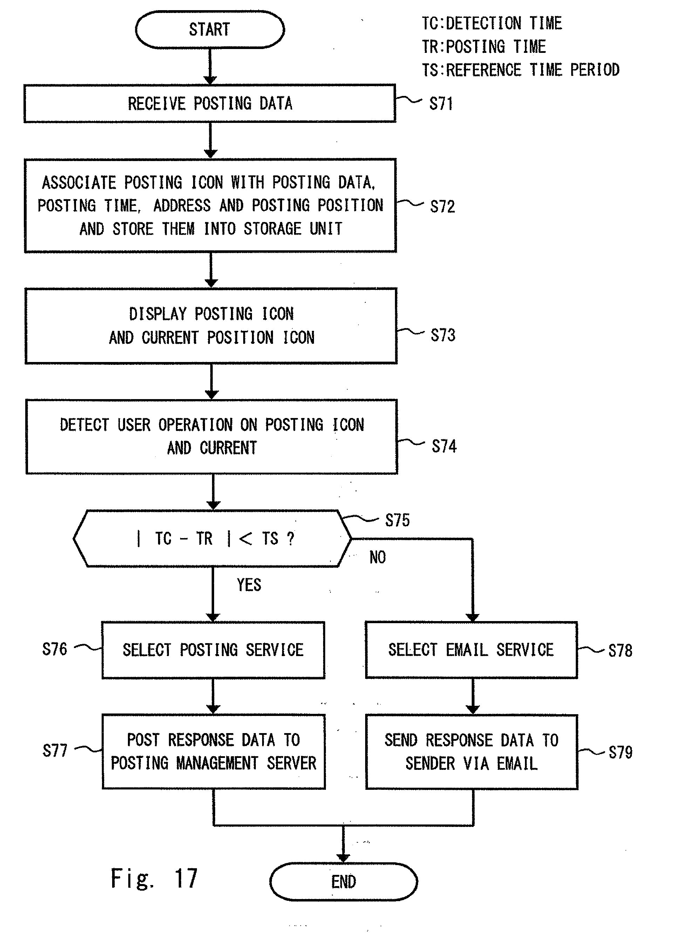

Fig. 17 is a flowchart showing a flow of a control process of the terminal device according to the fourth exemplary embodiment of the present invention. First, the receiving means 431 receives posting data (S71). For example, the receiving means 431 downloads the posting data 412 or the like from the posting management server 410 through the network N. At this time, the receiving means 431 may perform acquisition in response to an instruction from the message posting client application. Further, the receiving means 431 may receive the posting data 412 or the like through the posting service.

Next, the correspondence means 432 associates the posting icon with the received posting data 412, the posting time 413, the address 414 and the posting position 415 and stores them into the storage unit 433 (S72). Then, the display control means 434 displays the posting icon and the current position icon on the display unit 435 (S73).

The detection means 436 detects the operation OP by the user U on the posting icon and the current position icon (S74). Then, the selection means 437 determines whether a difference between the detection time TC and the time information TR is less than the reference time period TS or not (S75). When it is determined in Step S75 that the difference is less than the reference time period TS, the selection means 437 selects the posting service (S76). Then, the transmitting means 438 posts the response data 444 to the posting management server 410 using the message posting client application (S77).

On the other hand, when it is determined in Step S75 that the difference is equal to or more than the reference time period TS, the selection means 437 selects the email service (S76). Then, the transmitting means 438 sends the response data 444 via email to the address 414, which is the sender, using the email client application (S79).

As described above, according to the fourth exemplary embodiment of the present invention, in the case where the address information that can be a destination is associated with one icon, and information that corresponds to information to be sent is associated with the other icon, when a certain contact operation on the both icons is detected, the information to be sent is sent to the address information. Particularly, a communication service or an application is switched according to a time difference between the time when the operation on the both icons is detected and the time information associated with one icon. Note that the operation on the both icons may be any of the first operation and the second operation according to the first exemplary embodiment described above.

### <Fifth exemplary embodiment of the invention>

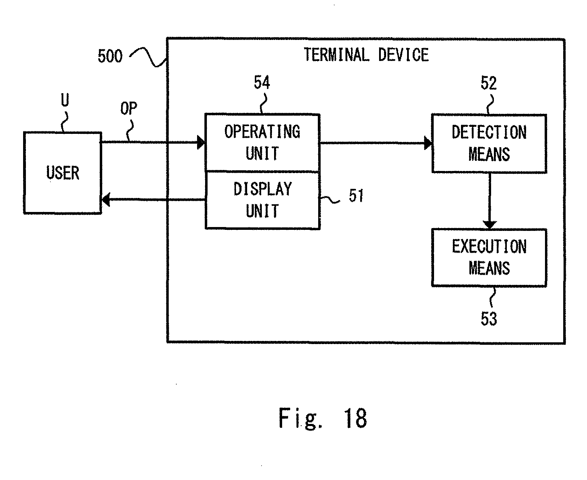

Fig. 18 is a block diagram showing a configuration of a terminal device 500 according to a fifth exemplary embodiment of the present invention. The terminal device 500 includes a display unit 51, an operating unit 54, a detection means 52 and an execution means 53. The display unit 51 is a device having a screen that displays data to be output. The operating unit 54 is a device that can accept the operation OP from the user U. The operating unit 54 has a touch panel, a touch pad or the like, for example. The detection means 52 detects the operation OP by the user U that selects arbitrary two points on the display unit 51 in the state where the first index and the second index are displayed on the display unit 51 and moves the two selected positions in the same direction. When the operation OP is detected by the detection means 52, the execution means 53 performs scrolling of the whole content displayed on the display unit 51 regardless of whether each of the two selected positions is the display position of the first index or the second index.

Further, the detection means 52 may further detect a single selection operation by the user U that selects either one of the first index or the second index by a single operation object, and when the single selection operation is detected, the execution means 53 may perform processing based on the data associated in advance with the selected index.

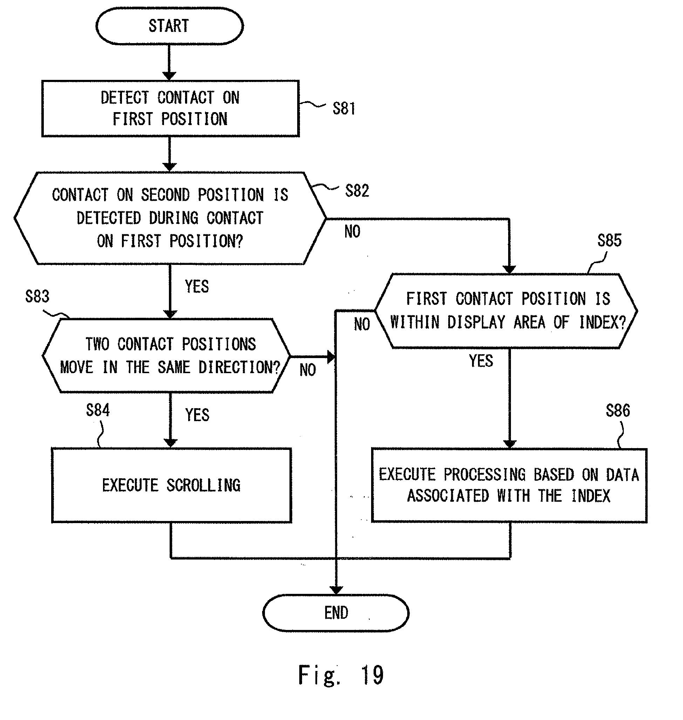

Fig. 19 is a flowchart showing a flow of a control process of the terminal device according to the fifth exemplary embodiment of the present invention. It is assumed that two or more indexes, i.e. images, are displayed on the display unit 11. Then, the operating unit 54 detects a contact on a first position on the display unit 51 by the user U (S81). Next, the detection means 52 determines whether the operating unit 54 has detected a contact on a second position during a contact on the first position (S82). When it is determined in Step S82 that a contact on the second position is detected, the detection means 52 determines whether the two contact positions are moving in the same direction (S83). When it is determined in Step S83 that they are moving in the same direction, the execution means 53 performs scrolling (S84). Specifically, it scrolls the whole display content on the display unit 51 in the sliding direction of the contact positions.

On the other hand, when it is determined in Step S82 that a contact on the second position is not detected, the detection means 52 detects whether the first contact position is within the display area of the index (S85). When it is determined in Step S85 that the first contact position is within the display area of the index, the execution means 53 performs processing based on the data associated with the index (S86). The processing based on the data associated with the index may be displaying a pop-up screen to enable acceptance of update or the like related to the data, for example.

When it is determined in Step S83 that the two contact positions are not moving in the same direction, the process ends. Note that, however, processing may be performed to detect the first operation as shown in Fig. 11. Further, when it is determined in Step S85 that the first contact position is not within the display area of the index, the process ends. Note that, however, processing may be performed to detect the second operation as shown in Fig. 11.

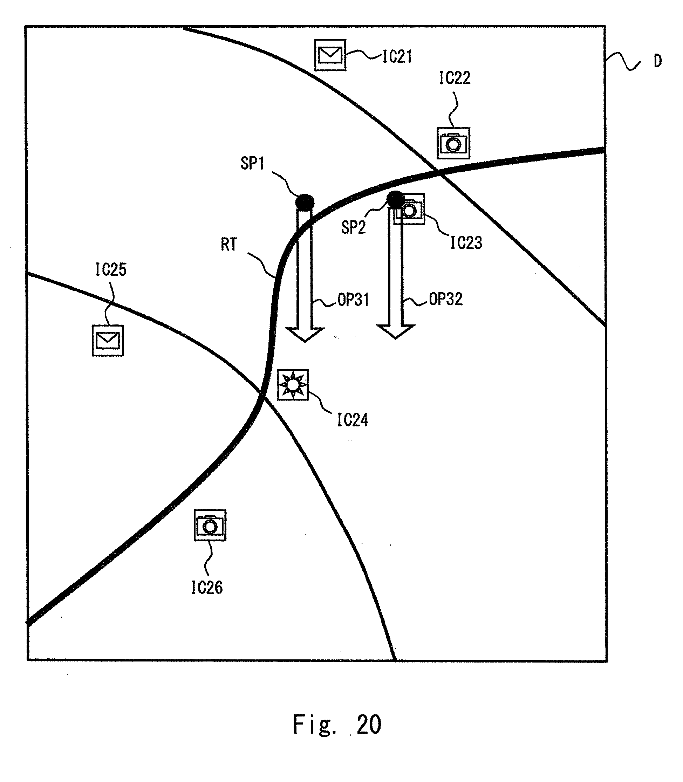

Fig. 20 is a diagram showing an example of a scroll operation according to the fifth exemplary embodiment of the present invention. On the screen D, a plurality of indexes such as icons IC21 to IC26 and a route RT are displayed. When the user U selects the selected position SP1 (Step S81 in Fig. 19) and selects the selected position SP2 (YES in Step S82 in Fig. 19), and further, the selected positions SP1 and SP2 are moving in the same direction by the slide operations OP31 and OP32 (YES in Step S83 in Fig. 19), the whole display content on the screen D scrolls down.

In general, the whole display content on the screen scrolls by the operation that touches one position on the screen with one finger (single-touch) and slides it. However, in the state where data icons are displayed on the screen, there is a case where data icons occupy a large space of the screen, such as when the number of icons or the size of icons is large. In this case, scrolling the screen with a single-touch can cause interference with some data icons, which results in that processing related to the touched data icon is performed before scrolling. Therefore, a user needs to find the area other than the icons and touch the screen for scrolling, which makes scrolling difficult.

In light of the above, according to the fifth exemplary embodiment of the present invention, in the case where a plurality of indexes are displayed on the screen, when arbitrary two points are selected and slide in the same direction, the whole display content on the screen scrolls regardless of whether the selected position is an index or not. Thus, even when the proportion of the display areas of the indexes on the screen is large, a user can perform scrolling with a simple and easy operation at desired timing without avoiding the display areas of the indexes.

### <Sixth exemplary embodiment of the invention>

A terminal device according to a sixth exemplary embodiment of the present invention combines all or some of the first to fifth exemplary embodiments described above. Further, specific examples of each data are described hereinbelow. The first data and the second data according to the first or third exemplary embodiment may be a photographed image, posting data, email data, weather information, schedule data, address book data, spot information, current position or the like. The photographed image is image data taken by a terminal device having a photographing function or a digital camera, and it is preferably associated with a photographing position and an icon image like the icon IC22 in Fig. 20, for example. Further, the posting data is the posting data 412 in Fig. 15, for example, and it is preferably associated with identification information of a poster, a posting position, position information contained in the body (place name, address etc.), the posting time 413, and the icon image provided by the message posting service such as a simple blog. Further, the email data is the email data Dc1 in Fig. 7, for example, and it is preferably associated with a sending position, position information contained in the body (place name, address etc.) and the icon image like the icon IC21 in Fig. 20, for example.

Further, the weather information contains position information, meteorological information (including tide information) and the like, and it is preferably associated with the icon image like the icon IC24 in Fig. 20, for example. Further, the route information includes a jogging route, a recommended hiking or cycling course and the like, and it may be associated with display like the route RT in Fig. 20, for example, as the index. Note that the route information contains a travel route such as departure and arrival positions and a stopover place.

Further, the schedule data contains date and time, place, title, content, position information contained in the body (place name, address etc.), and it is preferably associated with the icon image representing a schedule. Further, the address book data contains a plurality of addresses or contact addresses such as email addresses and telephone numbers, for example, and it is preferably associated with the icon image representing an address book. Further, the spot information contains camping area information, ski resort information, hot spring area information, park information and the like, and it may be associated with the icon image representing each facilities. Further, the current position contains position information of the terminal on the map and identification information of the user, and it may be associated with the icon image representing a user.

For example, the posting data, the weather information, the route information, the spot information and the like may be external data that are initially stored in the server and downloaded from the server by the terminal device, and their icons may be displayed on the screen by associating the icons with the external data. Note that, the terminal device may acquire those information from the server as the external data at any timing, such as when displaying the icon or in advance. Alternatively, the posting data, the weather information and the like that are stored in the server may not be actually stored in the terminal device, and only their identification information may be acquired and the icon image or the like may be associated thereto.

A specific example of the first operation according to the first exemplary embodiment is described hereinbelow. The first operation may be an operation that substantially simultaneously touches each of the two icons with one finger of a user and brings them together. Then, the data corresponding to those two icons are stored in association with each other. A combination of the icons to be brought together may be any combination of the indexes described above. Hereinafter, a typical combination and processing performed in each case are described as examples.

### - Image icon + Posting icon

In this case, the image data and the posting data associated with the respective icons are stored in association with each other. For example, the image data obtained by taking a picture of the scenery around a certain store and the posting data of text that introduces the store are associated with each other.

### - Image icon + Email icon

In this case, the image data and the email data associated with the respective icons are stored in association with each other. For example, the image data obtained by taking a picture of the scenery around a certain store and the email data of text that introduces the store are associated with each other.

### - Image icon + Route information icon

In this case, the image data and the route information associated with the respective icons are stored in association with each other. For example, a certain jogging route and the image data obtained by taking a picture of the scenery around the route are associated with each other.

### - Image icon + Schedule icon

In this case, the image data and the schedule data associated with the respective icons are stored in association with each other. For example, a schedule of live information and the image data obtained by taking a picture of the appearance of the building where the live is held are associated with each other.

### - Image icon + Weather information icon

In this case, the image data and the weather information associated with the respective icons are stored in association with each other. For example, weather information in a certain place and the image data obtained by taking a picture of the sky above that place are associated with each other.

Note that, although the examples in which one index is the "image icon" in the first operation are described above, it is not limited thereto as a matter of course. If association is established by the first operation, when one icon is selected after the association, the data corresponding to the other icon associated thereto can be easily referred to. Further, the associated data can be deleted together, not limited to be used for reference.

Further, a specific example of the second operation according to the first exemplary embodiment is described hereinbelow. The first operation may be an operation that touches one icon (start point) with one finger of a user and moves it to another icon (end point). Then, transmission related to the two icons is performed. A combination of the start point and the end point may be any combination of the indexes described above. Hereinafter, a typical combination and processing performed in each case are described as examples.

### - Start point: Current position icon, End point: Posting icon

In this case, when the current time is within a specified time from the posting time, a response is made using the same posting service. On the other hand, when a specified time has elapsed from the posting time at the current time, a user can select either making a call or sending an email to a poster.

### - Start point: Image icon, End point: Posting icon

In this case, when the current time is within a specified time period from the posting time, image data is sent as attachment using the same posting service. On the other hand, when a specified time period has elapsed from the posting time at the current time, image data is sent as email attachment to a poster.

### - Start point: Weather information icon, End point: Posting icon

In this case, when the current time is within a specified time period from the posting time, weather information is sent as attachment using the same posting service. On the other hand, when a specified time period has elapsed from the posting time at the current time, weather information is sent as email attachment to a poster.

### - Start point: Current position icon, End point: Email icon

In this case, an email is sent to the address information contained in the email icon as a destination.

### - Start point: Image icon, End point: Email icon

In this case, image data is sent as email attachment to the address information contained in the email icon as a destination.

### - Start point: Current position icon, End point: Address book icon

In this case, an email is sent to the address information contained in the address book as a destination.

### - Start point: Image icon, End point: Address book icon

In this case, image data is sent as email attachment to the address information contained in the address book as a destination.

In the above examples, a combination of the start point and the end point may be opposite.

### <Other exemplary embodiments of the invention>

In the first to fourth exemplary embodiments described above, the scrolling in the fifth exemplary embodiment may be further added. Specifically, the detection means detects, as a third operation, that arbitrary two points on the display unit are selected by a user in the state where the first index and the second index are displayed on the display unit, and the two selected positions have both moved in the same direction, and when the third operation is detected, the execution means performs scrolling of the whole content displayed on the display unit regardless of whether each of the two selected positions is the display position of the first index or the second index. In other words, a means of performing scrolling of the display content when the detection means detects the moving operation (sliding operation) in the same direction by a plurality of operating objects (two fingers) may be further included.

Further, stated differently, the present invention is as follows. Specifically, by performing an operation on two (or more) icons in the state where a plurality of icons are displayed, different processing is performed by different operations when performing processing on data corresponding to the icon.

Further, the invention is not limited to the exemplary embodiments described above, and various changes in form and details may be made therein without departing from the spirit and scope of the present invention described earlier. For example, although the operating unit 15 is provided on the display unit 11 for direct operation of the index displayed on the screen of the display unit 11 in the first exemplary embodiment described above, it is not limited thereto. The operating unit 15 may be provided at the position distant from the display unit 11 for indirect operation of the index displayed on the screen of the display unit 11. This is the same in the second to sixth exemplary embodiments. Further, although the present invention is implemented as a hardware configuration in the exemplary embodiment described above, the present invention is not limited thereto. The present invention may be implemented by causing a CPU (Central Processing Unit) to execute a computer program to perform given processing.

In the above example, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

The whole or part of the exemplary embodiments disclosed above can be described as, but not limited to, the following supplementary notes.

### (Supplementary note A1)

A terminal device comprising:
a display control means for displaying a first index associated with first data and a second index associated with second data at positions distant from each other on a display unit;
a detection means for detecting which of a first operation that brings the first index and the second index together and a second operation that moves one of the first index and the second index to a display position of the other one an operation on the first index and the second index is; and
an execution means for executing first processing using the first data and the second data when the first operation is detected, and executing second processing different from the first processing using the first data and the second data when the second operation is detected.

### (Supplementary note A2)

The terminal device according to Supplementary note A1, wherein
when overlap of display areas of the first index and the second index is detected, the detection means detects the operation as the first operation when the display areas of both of the first index and the second index are moving by a slide operation, and detects the operation as the second operation when the display area of one of the first index and the second index is moving to the display area of the other index by a slide operation and the display area of the other index is not moving.

### (Supplementary note A3)

The terminal device according to Supplementary note A1 or A2, wherein
when an operation on the first index and the second index is detected by the detection means, the execution means selects one of the first processing and the second processing based on a combination of types of the first index and the second index or an attribute of the first data or the second data and executes the selected processing.

### (Supplementary note A4)

The terminal device according to any one of Supplementary notes A1 to A3, wherein
different position information are associated in advance with the first index and the second index, and
the display control means displays map data on the display unit, and displays the first index and the second index at positions on the map data corresponding to the position information respectively associated with the first index and the second index.

### (Supplementary note A5)

The terminal device according to any one of Supplementary notes A1 to A4, further comprising:
a storage unit for storing the first data and the first index in association with each other, and the second data and the second index in association with each other, wherein
the execution means executes, as the first processing, processing of storing the first data and the second data in association with each other into the storage means.

### (Supplementary note A6)

The terminal device according to any one of Supplementary notes A1 to A5, wherein
at least one of the first data and the second data is information indicating an address in data communication, and
the execution means executes, as the second processing, processing of transmitting one of the first data and the second data to the address indicated by the other one.

### (Supplementary note A7)

The terminal device according to any one of Supplementary notes A1 to A6, further comprising:
a correspondence means for associating the first index and first position information with the first data generated in the terminal device, and associating the second index and second position information distant from the first position information with the second data acquired from outside, wherein
the display control means displays the first index on the display unit based on the first position information and displays the second index on the display unit based on the second position information.

### (Supplementary note A8)

The terminal device according to any one of Supplementary notes A1 to A7, wherein
the detection means detects a third operation that selects arbitrary two points on the display unit by a user when the first index and the second index are displayed on the display unit and moves the two selected positions both in the same direction, and
when the third operation is detected, the execution means executes scrolling of a whole display content displayed on the display unit regardless of whether each of the two selected positions is a display position of the first index or the second index.

### (Supplementary note B1)

A terminal device comprising:
a display control means for displaying a first index associated with address information of an external sender received from the sender through a first communication service and time information related to the reception and a second index different from the first index at positions distant from each other on a display unit;
a detection means for detecting an operation on the first index and the second index;
a selection means for selecting one of the first communication service and a second communication service different from the first communication service based on the time information associated with the first index and a detection time when the operation is detected; and
an execution means for executing communication processing through the selected communication service using the address information associated with the first index as a destination.

### (Supplementary note B2)

The terminal device according to Supplementary note B1, wherein
the selection means determines whether the time information associated with the first index and the detection time are within a specified time period when the operation is detected, and
the selection means selects the first communication service when determining that the time information and the detection time are within a specified time period, and selects the second communication service when determining that the time information and the detection time are not within a specified time period.

### (Supplementary note B3)

The terminal device according to Supplementary note B1 or B2, further comprising:
a correspondence means for associating received data with the first index and associating response data to the received data with the second index, and
the execution means sends the response data associated with the second index through the selected communication service, using address information associated with the first index as a destination.

### (Supplementary note B4)

The terminal device according to Supplementary note B3, wherein
the first communication service is a text data posting service,
the received data is posting data posted by the external sender through the posting service,
the selection means selects the posting service when determining that the time information and the detection time are within a specified time period, and
the execution means registers a response message to the posting data with a server that manages the posting service, using address information associated with the first index as a destination.

### (Supplementary note B5)

The terminal device according to Supplementary note B1 or B2, wherein
the execution means starts an application for performing the selected communication service as the communication processing.

### (Supplementary note C1)

A terminal device comprising:
a detection means for detecting an operation that selects arbitrary two positions on a display unit when a first index and a second index are displayed on the display unit and moves the two selected positions in the same direction; and
an execution means for executing scrolling of a whole display content displayed on the display unit regardless of whether each of the two selected positions is a display position of the first index or the second index, when the operation is detected by the detection means.

### (Supplementary note C2)

The terminal device according to Supplementary note C1, wherein
the detection means further detects a single selection operation by a user that selects either one of the first index or the second index by a single operation object, and
when the single selection operation is detected, the execution means executes processing based on data associated in advance with the selected index.

### (Supplementary note D1)

A method for controlling a terminal device comprising:
displaying a first index associated with first data and a second index associated with second data at positions distant from each other on a display unit;
detecting which of a first operation that brings the first index and the second index together and a second operation that moves one of the first index and the second index to a display position of the other one an operation on the first index and the second index is; and
executing first processing using the first data and the second data when the first operation is detected, and executing second processing different from the first processing using the first data and the second data when the second operation is detected.

### (Supplementary note E1)

A method for controlling a terminal device comprising:
displaying a first index associated with address information of an external sender received from the sender through a first communication service and time information related to the reception and a second index different from the first index at positions distant from each other on a display unit;
detecting an operation on the first index and the second index;
selecting one of the first communication service and a second communication service different from the first communication service based on the time information associated with the first index and a detection time when the operation is detected; and
executing communication processing through the selected communication service using the address information associated with the first index as a destination.

### (Supplementary note F1)

A method for controlling a terminal device comprising:
detecting an operation that selects arbitrary two positions on a display unit when a first index and a second index are displayed on the display unit and moves the two selected positions in the same direction; and
executing scrolling of a whole display content displayed on the display unit regardless of whether each of the two selected positions is a display position of the first index or the second index, when the operation is detected in the detection step.

### (Supplementary note G1)

A control program causing a computer to execute:
display control processing of displaying a first index associated with first data and a second index associated with second data at positions distant from each other on a display unit;
detection processing of detecting which of a first operation that brings the first index and the second index together and a second operation that moves one of the first index and the second index to a display position of the other one an operation on the first index and the second index is; and
execution processing of executing first processing using the first data and the second data when the first operation is detected, and executing second processing different from the first processing using the first data and the second data when the second operation is detected.

### (Supplementary note H1)

A control program causing a computer to execute:
display control processing of displaying a first index associated with address information of an external sender received from the sender through a first communication service and time information related to the reception and a second index different from the first index at positions distant from each other on a display unit;
detection processing of detecting an operation on the first index and the second index;
selection processing of selecting one of the first communication service and a second communication service different from the first communication service based on the time information associated with the first index and a detection time when the operation is detected; and
communication processing of performing communication through the selected communication service using the address information associated with the first index as a destination.

### (Supplementary note I1)

A control program causing a computer to execute:
detection processing of detecting an operation that selects arbitrary two positions on a display unit when a first index and a second index are displayed on the display unit and moves the two selected positions in the same direction; and
control processing of executing scrolling of a whole display content displayed on the display unit regardless of whether each of the two selected positions is a display position of the first index or the second index, when the operation is detected in the detection processing.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.

This application is based upon and claims the benefit of priority from Japanese patent application No. 2012-049380, filed on March 6, 2012, the disclosure of which is incorporated herein in its entirety by reference.

### Reference Signs List

- 100: TERMINAL DEVICE
- 11: DISPLAY UNIT
- 12: DISPLAY CONTROL MEANS
- 13: DETECTION MEANS
- 14: EXECUTION MEANS
- 15: OPERATING UNIT
- U: USER
- OP: OPERATION
- D: SCREEN
- IC11: INDEX
- IC12: INDEX
- OP1: BRING-TOGETHER OPERATION
- OP11: OPERATION
- OP12: OPERATION
- IC13: INDEX
- IC14: INDEX
- OP2: MOVING OPERATION
- 110: CPU
- 120: RAM
- 130: ROM
- 140: COMMUNICATION UNIT
- 150: MONITOR
- 151: LCD
- 152: TOUCH PANEL
- 160: HARD DISK
- 1611: FIRST INDEX
- 1612: SECOND INDEX
- 1621: FIRST DATA
- 1622: SECOND DATA
- 163: CONTROL PROGRAM
- 200: TERMINAL DEVICE
- 21: DISPLAY UNIT
- 22: DISPLAY CONTROL MEANS
- 23: DETECTION MEANS
- 24: EXECUTION MEANS
- 25: STORAGE UNIT
- 251: ICON
- 252: IMAGE ETC.
- 253: POSITION INFORMATION
- 254: CORRESPONDING INFORMATION
- 255: ASSOCIATED INFORMATION
- 256: MAP INFORMATION
- 26: CORRESPONDENCE MEANS
- 27: GENERATION MEANS
- 28: ACQUISITION MEANS
- 29: OPERATING UNIT
- DD: DOWNLOAD DATA
- P1: ASSOCIATION PROCESS
- P2: EMAIL SENDING PROCESS
- CRa: CORRESPONDING INFORMATION
- ICa: IMAGE ICON
- Da1: IMAGE DATA
- Da2: POSITION INFORMATION
- CRb: CORRESPONDING INFORMATION
- ICb: SCHEDULE ICON
- Db1: SCHEDULE DATA
- Db2: POSITION INFORMATION
- CRc: CORRESPONDING INFORMATION
- ICc: EMAIL ICON
- Dc1: EMAIL DATA
- Dc2: POSITION INFORMATION
- Dc3: ADDRESS INFORMATION
- AS: ASSOCIATED INFORMATION
- IC21: ICON
- IC22: ICON
- IC23: ICON
- IC24: ICON
- IC25: ICON
- IC26: ICON
- RT: ROUTE
- X: DISPLAY AREA OVERLAP POSITION
- Y: DISPLAY AREA OVERLAP POSITION
- 300: TERMINAL DEVICE
- 301: SENDER
- 31: DISPLAY UNIT
- 32: DISPLAY CONTROL MEANS
- 33: SELECTION MEANS
- 34: SELECTION MEANS
- 35: EXECUTION MEANS
- 36: OPERATING UNIT
- CS1a: FIRST COMMUNICATION SERVICE
- CS1b: FIRST COMMUNICATION SERVICE
- CS2: SECOND COMMUNICATION SERVICE
- TC: DETECTION TIME
- TR: TIME INFORMATION
- TS: REFERENCE TIME PERIOD
- 400: INFORMATION SYSTEM
- 410: POSTING MANAGEMENT SERVER
- 411: DATABASE
- 412: POSTING DATA
- 413: POSTING TIME
- 414: ADDRESS
- 415: POSTING POSITION
- 420: TERMINAL DEVICE
- 430: TERMINAL DEVICE
- 431: RECEIVING MEANS
- 432: CORRESPONDENCE MEANS
- 433: STORAGE UNIT
- 434: DISPLAY CONTROL MEANS
- 435: DISPLAY UNIT
- 436: DETECTION MEANS
- 437: SELECTION MEANS
- 438: TRANSMITTING MEANS
- 439: OPERATING UNIT
- 440: ICON
- 441: RECEIVED DATA
- 442: TIME INFORMATION
- 443: ADDRESS
- 444: RESPONSE DATA
- 445: POSITION INFORMATION
- 446: DETECTION TIME
- 447: CORRESPONDING INFORMATION
- 448: MAP INFORMATION
- 449: COMMUNICATION APPLICATION
- N: NETWORK
- CRd: CORRESPONDING INFORMATION
- ICd: POSTING ICON
- Dd1: POSTING DATA
- Dd2: ADDRESS INFORMATION
- Dd3: POSTING TIME
- Dd4: POSITION INFORMATION
- CRe: CORRESPONDING INFORMATION
- ICe: RESPONSE ICON
- De1: RESPONSE DATA
- De2: POSITION INFORMATION
- 500: TERMINAL DEVICE
- 51: DISPLAY UNIT
- 52: DETECTION MEANS
- 53: EXECUTION MEANS
- 54: OPERATING UNIT
- SP1: SELECTED POSITION
- SP2: SELECTED POSITION
- OP31: SLIDE OPERATION
- OP32: SLIDE OPERATION

## Claims

1. A terminal device comprising:
a display control means for displaying a first index associated with first data and a second index associated with second data at positions distant from each other on a display unit;
a detection means for detecting which of a first operation that brings the first index and the second index together and a second operation that moves one of the first index and the second index to a display position of the other one an operation on the first index and the second index is; and
an execution means for executing first processing using the first data and the second data when the first operation is detected, and executing second processing different from the first processing using the first data and the second data when the second operation is detected.

2. The terminal device according to Claim 1, wherein
when overlap of display areas of the first index and the second index is detected, the detection means detects the operation as the first operation when the display areas of both of the first index and the second index are moving by a slide operation, and detects the operation as the second operation when the display area of one of the first index and the second index is moving to the display area of the other index by a slide operation and the display area of the other index is not moving.

3. The terminal device according to Claim 1 or 2, wherein
when an operation on the first index and the second index is detected by the detection means, the execution means selects one of the first processing and the second processing based on a combination of types of the first index and the second index or an attribute of the first data or the second data and executes the selected processing.

4. The terminal device according to any one of Claims 1 to 3, wherein
different position information are associated in advance with the first index and the second index, and
the display control means displays map data on the display unit, and displays the first index and the second index at positions on the map data corresponding to the position information respectively associated with the first index and the second index.

5. The terminal device according to any one of Claims 1 to 4, further comprising:
a storage means for storing the first data and the first index in association with each other, and the second data and the second index in association with each other, wherein
the execution means executes, as the first processing, processing of storing the first data and the second data in association with each other into the storage means.

6. The terminal device according to any one of Claims 1 to 5, wherein
at least one of the first data and the second data is information indicating an address in data communication, and
the execution means executes, as the second processing, processing of transmitting one of the first data and the second data to the address indicated by the other one.

7. A terminal device comprising:
a display control means for displaying a first index associated with address information of an external sender received from the sender through a first communication service and time information related to the reception and a second index different from the first index at positions distant from each other on a display unit;
a detection means for detecting an operation on the first index and the second index;
a selection means for selecting one of the first communication service and a second communication service different from the first communication service based on the time information associated with the first index and a detection time when the operation is detected; and
an execution means for executing communication processing through the selected communication service using the address information associated with the first index as a destination.

8. A terminal device comprising:
a detection means for detecting an operation that selects arbitrary two positions on a display unit when a first index and a second index are displayed on the display unit and moves the two selected positions in the same direction; and
an execution means for executing scrolling of a whole display content displayed on the display unit regardless of whether each of the two selected positions is a display position of the first index or the second index, when the operation is detected by the detection means.

9. A method for controlling a terminal device comprising:
displaying a first index associated with first data and a second index associated with second data at positions distant from each other on a display unit;
detecting which of a first operation that brings the first index and the second index together and a second operation that moves one of the first index and the second index to a display position of the other one an operation on the first index and the second index is; and
executing first processing using the first data and the second data when the first operation is detected, and executing second processing different from the first processing using the first data and the second data when the second operation is detected.

10. A non-transitory computer readable medium storing a control program causing a computer to execute:
display control processing of displaying a first index associated with address information of an external sender received from the sender through a first communication service and time information related to the reception and a second index different from the first index at positions distant from each other on a display unit;
detection processing of detecting an operation on the first index and the second index;
selection processing of selecting one of the first communication service and a second communication service different from the first communication service based on the time information associated with the first index and a detection time when the operation is detected; and
communication processing of performing communication through the selected communication service using the address information associated with the first index as a destination.
